# EUROPEAN PATENT APPLICATION

(11) **EP 3 339 313 A1**
(43) Date of publication of application: **27.06.2018**
(21) Application number: 16206466.1
(22) Date of filing: 22.12.2016
(51) Int. Cl.: C07F 15/00, B01J 31/22, C07B 37/04

(54) **METAL ORGANIC COMPOUNDS**

(71) Applicant: UMICORE AG & CO. KG, 63457 Hanau-Wolfgang (DE)
(72) Inventor: NOLAN, Steven P., Zwijnaarde, 9000 (BE)

(57) **Abstract**

Disclosed are novel metal organic compounds, a method for their production and their use to make catalytically active compounds, which can be used in well-established methods of organic synthesis.

## Description

Palladium based catalysts have been of increasing interest in the past for various purposes and.

Heck reaction (Dieck, H. A.; Heck, R. F. "Organophosphinepalladium complexes as catalysts for vinylic hydrogen substitution reactions". Journal of the American Chemical Society. 1974, 96 (4), 1133), Stille *reaction* (Kosugi, M.; Sasazawa, K.; Shikizu, Y.; Migita, T. Chem. Lett., 1977, 6, 301-302), Suzuki reaction (Advanced Organic Chemistry, Springer, 2007, 739-747), Negishi coupling (Journal of the Chemical Society Chemical Communications 1977, (19), 683.) and Buchwald-Hartwig amination are well-known examples of reactions making use of such catalysts.

Various different ligands have been described [Examples for ligands and references needed] that can be employed for many or all of the above reactions.

For some reaction procedures it is desirable to employ a stable pre-catalyst which can be activated or converted to the catalytically active species in a simple manner. This object is solved by a palladium complex of formula 1 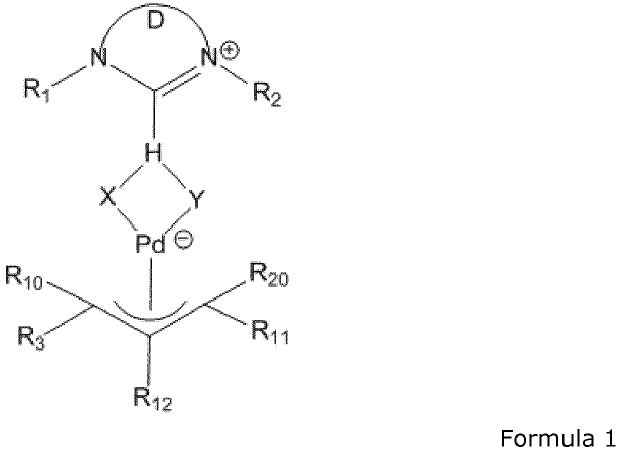 wherein
R1 and R2 are identical or different and are selected from the group consisting of hydrogen, substituted or unsubstituted alkyl, substituted or unsubstituted heterocycloalkyl, substituted or unsubstituted aryl and substituted or unsubstituted heteroaryl;
D can be part of a C2 to C4 bridge that can be saturated or unsaturated, substituted or unsubstituted, with bridge carbon atoms being able to be replaced by heteroatoms.
The group carrying R1, R2 and D is, in general terms, known to the artisan as an NHC ligand or N-heterocyclic carbene ligand. They are known in the art and described, for example, in the book "N-Heterocyclic carbenes in transition metal catalysis", Springer Verlag 2007 by Frank Glorius.
R3, R11 and R12 may be the same or different and can be hydrogen, substituted or unsubstituted aryl, heteroaryl, alkyl, alkenyl, alkynyl or combinations thereof.
R10 and R20 can be hydrogen or form a substituted or unsubstituted, unsaturated ring, which may be fused with further rings;
X and Y may be the same or different and are anionic ligands.

This complex is an air-stable compound allowing storage and handling under a variety of conditions. It can be converted to a known catalytically active species by conversion with a base.

More specifically, the compound of formula can be a compound of formula 1a 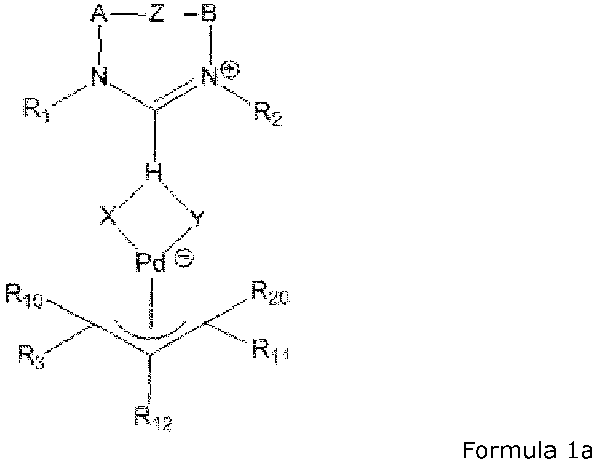 wherein
A and B are carbon atoms;
Z is a single bond or a double bond;
R1 and R2 may be the same or different and are selected from the group consisting of hydrogen, substituted or unsubstituted (C1-C18)-alkyl, substituted or unsubstituted (C2-C7)-heterocycloalkyl, substituted or unsubstituted (C6-C14)-aryl, substituted or unsubstituted (C3-C14)-heteroaryl;
R3, R11 and R12 may be the same or different and can be hydrogen, substituted or unsubstituted aryl, heteroaryl, alkyl, alkenyl, alkynyl or combinations thereof.
R10 and R20 can be hydrogen or form a substituted or unsubstituted, unsaturated ring, which may be fused with further rings;
X and Y may be the same or different and are anionic ligands.

In particular, the compounds of formula 1 or 1a may be a compound of formula 2 or 3 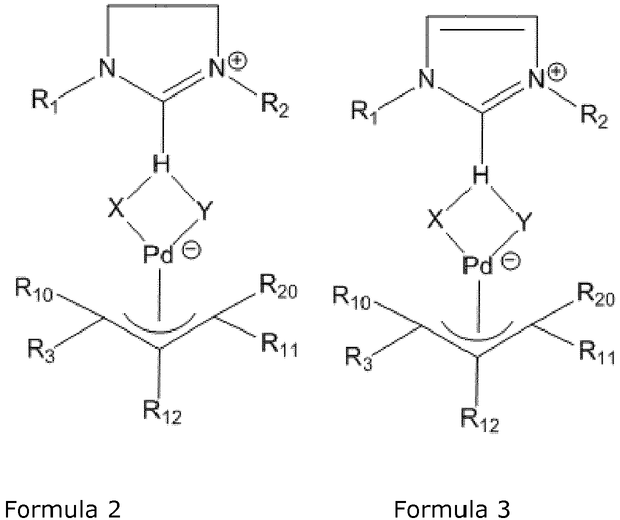 wherein R1, R2, R3, R11, R12, R10, R20, X and Y are as defined above.

X and Y can be the same or different and are anionic ligands. Suitable ligands are, for example, halogen, suitable borate anions or organic anions, particularly acetate, fluoroacetate, tetrafluoroborate, tetraphenylborate, chlorine or bromine. Usually, X and Y are the same.

As for the NHC ligand employed, in general all common NHC ligands can be used for specific purposes. If common ligands of this group of ligands are used, R1 and R2 are each independently selected from the group consisting of formula 4 to formula 8 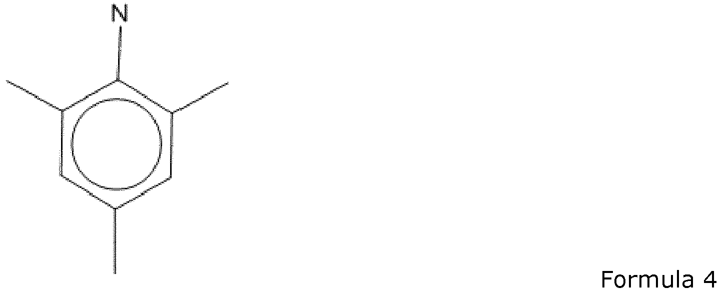 2,4,6-trimethylphenyl 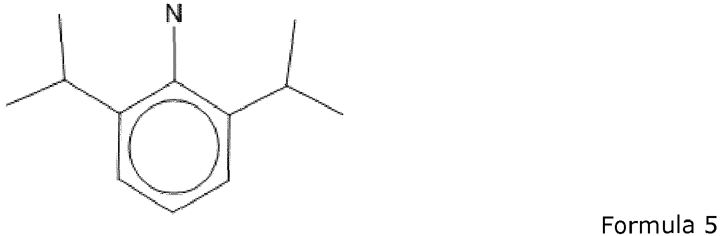 2,6-diisopropylphenyl 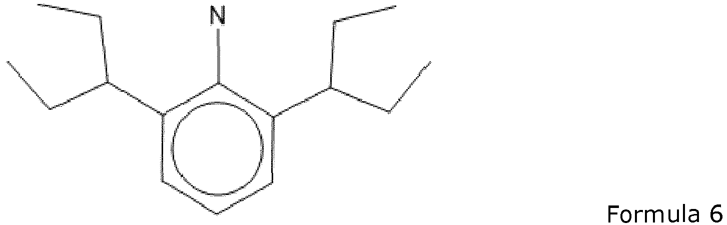 2,6-bis(diethylmethyl)-phenyl 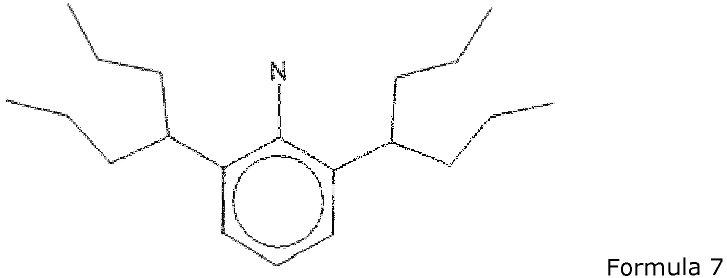 2,6-bis(dipropylmethyl)-phenyl or 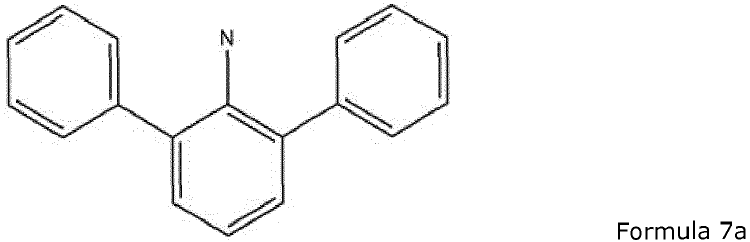 or 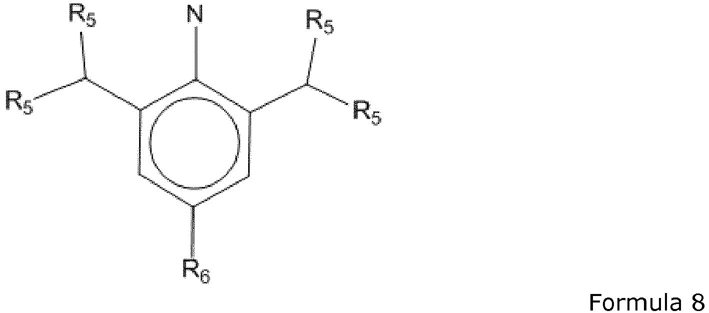 wherein, in Formula 8, R5 is aryl, in particular phenyl or naphthyl, R6 is hydrogen, alkyl or alkoxy, such as methyl or methoxy and N indicates the nitrogen atom of the heterocyclic ring in formulae 1 to 3 to which the substituted aryl ring selected from the groups listed above is linked. R1 and R2 may be selected independently and thus can be different from each other, but it is common if they are the same. Specifically, Formula 8 can be 2,6-bis(diphenylmethyl)-4-methylphenyl, 2,6-bis(diphenylmethyl)-4-methoxyphenyl, 2,6-bis(dinaphthylmethyl)-4-methylphenyl, 2,6-bis(dinaphthylmethyl)-4-methoxyphenyl.

In this compound, the palladium (Pd) is also coordinated by a compound that can be described as R3R10-(allyl-R12)-R11R20 that has the structure of formula 9

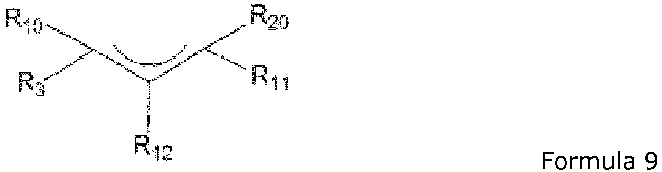

In this compound, R3, R11 and R12 being selected from the group consisting of hydrogen, substituted or unsubstituted alkyl, substituted or unsubstituted alkenyl, substituted or unsubstituted aryl, in particular methyl, ethyl, propyl, isopropyl, butyl, tert.-butyl, sec.-butyl, phenyl, naphthyl or combinations thereof.

In a specific embodiment, R12 is hydrogen. In another specific embodiment, R11 is hydrogen as well.

In yet another specific embodiment, R10 and R20 are forming a five or six-membered unsaturated ring suitable for η³-coordination of the palladium. In this embodiment, the five or six-membered unsaturated ring can be fused with at least one benzene ring. In this embodiment, R11 and R12 can be hydrogen and R10 and R20 together may form a five membered unsaturated ring fused with a benzene ring so as to form an indene ring system.

Generally, but also in the specific embodiments with respect to R10, R11, R12 and R20 mentioned above, R3 can be selected from the group consisting of hydrogen, methyl, ethyl, propyl, isopropyl, butyl, tert.-butyl, sec.-butyl, phenyl, naphthyl or combinations thereof.

The group R3R10-(allyl-R12)-R11R20 thus can be, for example, cinnamyl or allyl. It can also be a substituted or unsubstituted indene, such as a compound of formula 10.

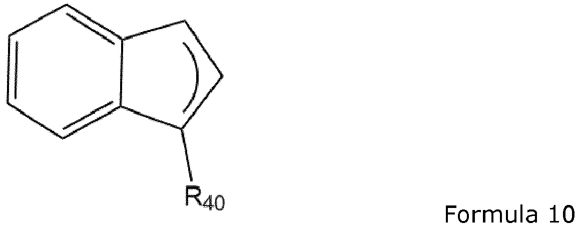

In this compound of Formula 10, R40 can be hydrogen, substituted or unsubstituted alkyl as well as substituted or unsubstituted aryl, more specifically phenyl, naphthyl, p-methylphenyl, methyl, ethyl propyl, isopropyl, butyl or tert.-butyl.

The compounds of formula 1 to 3 can be made by a method wherein a salt of the respective NHC ligand, usually an imidazolium salt, is reacted with the palladium dimer [Pd(R3R10-(allyl-R12)-R11R20)(µ-X)]₂ [Are there other palladium compounds suitable to serve as educt for this reaction?] in a solvent, wherein R3, R10, R11, R12, R20 and X are as defined above.

This reaction can be illustrated by the following equation:

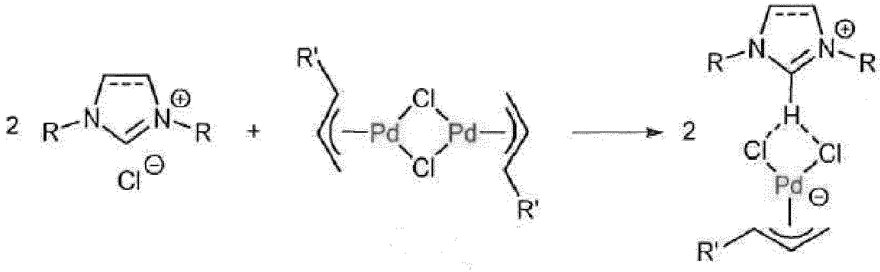

The method is rather robust with regard to the solvents used, so a wide variety of solvents can be employed. Suitable solvents are hydrocarbons, halogenated hydrocarbons, polar solvents, specifically straight-chained or cyclic haloalkyl, ether, ketones or combinations thereof. Thus, suitable solvents include, but are not limited to, toluene, pentane, hexane, heptane, cyclohexane, petrol ether, dichloromethane, chloroform, diethyl ether, methyl-*tert*.-butylether (2-methoxy-2-methylpropane), ethyl-*tert*.-butylether, cyclic ethers such as tetrahydrofurane or dioxane, acetone or combinations thereof.

The reaction can be easily carried out by providing the palladium educt [Pd(R3R10-(allyl-R12)-R11R20)(µ-X)]₂, the NHC salt, like an imidazolium salt, and the solvent into a suitable reactor and allow the reaction while stirring at a suitable reaction temperature for a suitable reaction time, which can be in general be selected from a wide range.

For example, the reaction might simply be carried out by refluxing the selected solvent, which would set the reaction temperature to the boiling point of the solvent, such as e.g. 111°C if the solvent used is toluene. In general, reaction temperatures of from 20°C to 111°C, in particular from 40°C to 90°C have proven to be suitable. A reaction time of 30 minutes to 24 hours, in particular of 1 to 5 hours depending on the educts and temperature used, has proven to be sufficient. Afterwards the solvent is removed, e.g. by distillation, and the product, a compound of formula 1, 1a, 2 or 3 is obtained in yields of usually above 90%, often even 98% or 99%.

The isolated compound of formula 1, 1a, 2 or 3 can be used to prepare a catalytically active compound of the type [Pd(NHC)(R3R10-(allyl-R12)-R11R20)X] having the formula 11 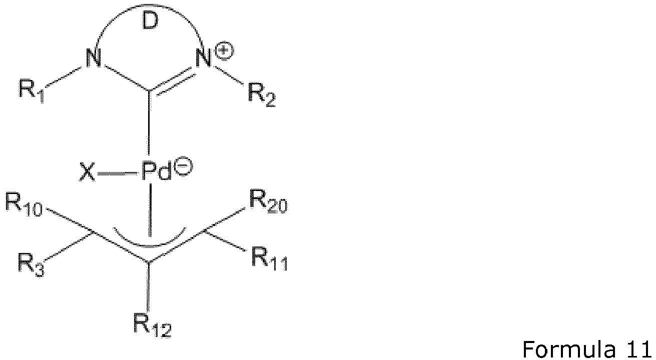 by addition of a base in presence of a solvent.

More specifically, the method of making a complex of the type [Pd(NHC)(R3R10-(allyl-R12)-R11R20)X] comprises the steps of
- providing a compound according to any of formulae 1, 1a, 2 or 3;
- reacting said compound with a base in the presence of a solvent;
- optionally isolating the resulting [Pd(NHC)(R3R10-(allyl-R12)-R11R20)X],
wherein NHC is the corresponding NHC ligand of the compound according to any of formulae 1, 1a, 2 or 3 as defined above.

This method is rather robust with regard to the solvents used, so a wide variety of solvents can be employed. Suitable solvents are hydrocarbons, halogenated hydrocarbons, polar solvents, specifically straight-chained or cyclic haloalkyl, ether, ketones, alcohols or combinations thereof. Polar-aprotic or polar-protic solvents have been found to be useful.

Thus, suitable solvents include, but are not limited to, benzene, toluene, xylene, pentane, hexane, heptane, cyclohexane, petrol ether, dichloromethane, chloroform, diethyl ether, methyl-*tert*.-butylether (2-methoxy-2-methylpropane), ethyl-*tert*.-butylether, cyclic ethers such as tetrahydrofurane or dioxane, acetone, C2 to C6 alcohols such as ethanol, isopropanol or n-butanol or combinations thereof.

The base to can be a basic metal compound, such as an alkaline or earth-alkaline oxide, hydroxide or carbonate, or an organic base such as an amine. Specifically, suitable bases are potassium carbonate, sodium carbonate, potassium hydroxide, sodium hydroxide, pyridine or triethylamine. [What temperatures and reaction times work best? Same as the reaction to make the Pd intermediate?]

The palladium complex of the type [Pd(NHC)(R3R10-(allyl-R12)-R11R20)X] so obtained can be used to catalyze a chemical reaction susceptible to catalysis by a palladium catalyst.

More specifically, this method of catalyzing a chemical reaction comprises the steps of
- Providing a complex of the type [Pd(NHC)(R3R10-(allyl-R12)-R11R20)X] with the method described above, and
- Employing the complex of the type [Pd(NHC)(R3R10-(allyl-R12)-R11R20)X] as catalyst in a chemical reaction, wherein NHC is the corresponding NHC ligand of the compound according to any of formulae 1, 1a, 2 or 3 as defined above.

This method is particularly suitable to carry out a carbon-carbon or carbon-nitrogen coupling reaction in organic chemistry. More specifically, Buchwald-Hartwig coupling reactions, Suzuki-Miyaura coupling reactions, Heck reaction or Stille reaction as well as Negishi, Sonogashira and Hiyama coupling reactions can be carried out in this way.

It is possible to add a compound of any of formulae 1, 1a, 2 or 3 as defined above to the reaction mixture of the coupling reaction to be catalyzed, together with a base, and then to carry out the coupling reaction as normally described in literature. In Heck reactions, for example, a base is normally added anyway. It might sometimes be necessary to adapt the amount of base in a few trials to achieve the best results.

It is also possible to prepare the complex of the type [Pd(NHC)(R3R10-(allyl-R12)-R11R20)X] from a compound of any of formulae 1, 1a, 2 or 3 by the method as described above, which is by addition of a base in presence of a solvent, and then to add the complex of the type [Pd(NHC)(R3R10-(allyl-R12)-R11R20)X] to the reaction mixture. The the complex of the type [Pd(NHC)(R3R10-(allyl-R12)-R11R20)X] can be isolated and then added to the reaction mixture of the coupling reaction or the solution thereof might simply transferred to the reaction mixture of the coupling reaction, as the case may be.

### Examples

### 1. Synthesis and optimisation of [Pd(IPr)(cin)Cl]

### Small scale:

IPr•HCl (50.0 mg, 0.117 mmol), [Pd(cin)(µ-Cl)]₂ (25.3 mg, 0.048 mmol), a magnetic stir bar and acetone (0.5 mL) were charged into a vial or roundbottomed flask, followed by K₂CO₃ (13.5 mg, 0.097 mmol). The mixture was stirred at 60 °C for 5 h. After the reaction was complete, the solvent was removed under vacuum. The residue was re-dissolved in dichloromethane (1 - 2 mL) and filtered through a pad of silica. The silica was washed with DCM (20 mL). The resulting solution was concentrated and dried under vacuum until a powder was obtained. In some cases, washing with pentane (5 mL) was necessary in order to remove the residual DCM. The product was obtained as a microcrystalline material in 98% (60.9 mg) yield.

### Large scale:

IPr•HCl (1.96 g, 4.63 mmol), [Pd(cin)(µ-Cl)]₂ (1 g, 1.93 mmol) and a magnetic stir bar were charged into a scintillation vial or round bottom flask. Acetone (20 mL) was then added, followed by K₂CO₃ (533 mg, 3.86 mmol) and the reaction mixture was refluxed for 24 h. The same general work up as above afforded the product in 95% (2.33g) yield.

**¹H NMR (400 MHz, CDCl₃):** δ (ppm) = δ 7.50 (t, *J*=7.7 Hz, 2H), 7.48-7.28 (d, *J*=7.7 Hz, 4H), 7.12 (m, 5H), 5.09 (m, 1H), 4.36 (d, *J*=12.9 Hz, 1H), 3.06 (m, 5H), 1.77(d, *J*=11.4 Hz, 1H), 1.43-1.36 (m, 12H), 1.16 (d, *J*=7.1 Hz, 12H).

**¹³C {¹H} NMR (100 MHz, CDCl₃):** δ (ppm) = δ 184.8 (C, carbene), 145.9 (C), 137.7 (C), 135.7 (C), 129.7 (CH) 128.0 (CH), 127.9 (CH), 127.1 (CH), 126.5 (CH), 124.0 (CH), 123.6 (CH), 108.6 CH), 90.0 (CH), 46.1 (CH₂), 33.9 (CH₂), 28.4 (CH), 26.0 (CH₃), 22.8 (CH₃).

**Elemental Analysis:** Expected C = 66.66, H = 7.15, N = 4.32. Found C = 66.73, H = 7.27, N = 4.38.

**Table S-1: Optimisation of the synthesis of [Pd(IPr)(cin)Cl]**

| | | | | |
|---|---|---|---|---|
| 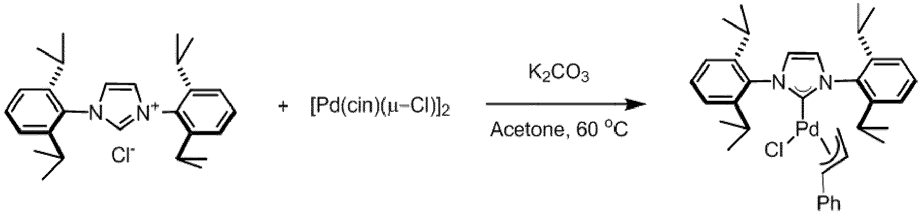 | | | | |

| Entry | IPr•HCl (equiv.) | K₂CO₃ (equiv.) | t (h) | Yield (%)^{a} |
|---|---|---|---|---|
| 1 | 1 | 2 | 3 | 94* |
| 2 | 1.1 | 2 | 3 | 100* |
| 3 | 1.2 | 1.1 | 5 | 98* |
| 4 | 1.3 | 1.1 | 5 | 100* |
| 5 | 1.5 | 1.1 | 5 | 100* |
| 6 | 1.2 | 0.9 | 5 | 99* |
| **7** | **1.2** | **1** | **5** | **98** |
| 8 | 1.2 | 1.3 | 5 | 100* |
| 9 | 1.2 | 1.5 | 5 | 96* |
| 10 | 1.2 | 0.6 | 5 | 65* |
| 11 | 1.2 | 0.4 | 5 | 69* |
| 12 | 1.2 | 0.2 | 5 | 52* |
| 13 | 1.2 | 1 | 5 | 94*^{b} |
| 14 | 1.2 | 1 | 5 | 99*^{c} |
| 15 | 1.2 | 1 | 6 | 99^{d} |

| | | | | |
|---|---|---|---|---|
| *¹H NMR shows impurities in the spectra. ^{a}Isolated yield. All reactions were carried out in air using technical grade acetone (0.235 M in respect to IPr•HCl). ^{b}Concentration = 0.117 M. ^{c}Concentration = 0.058M. ^{d}IPr•HCl and [Pd(cin)Cl]₂ were stirred in acetone for 1 h at 60 °C, then K₂CO₃ was added and the mixture was left to stir for 5h at 60 °C. | | | | |

2. Synthesis and optimisation of [Pd(IPr)(allyl)CI]

### Small scale:

IPr•HCl (50.0 mg, 0.117 mmol), [Pd(allyl)(µ-Cl)]₂ (17.8 mg, 0.048 mmol), a magnetic stir bar and acetone (0.5 mL) were charged into a vial or round bottom flask followed by K₂CO₃ (13.5 mg, 0.097 mmol). The mixture was stirred at 60 °C for 5 h. After the reaction was complete, the solvent was removed under vacuum. The residue was re-dissolved in dichloromethane (1-2 mL) and filtered through a pad of silica. The silica was washed with DCM (20 mL). The resulting solution was concentrated and dried in vacuum until a powder was obtained. In some cases washing with pentane (5 mL) was necessary in order to remove the residual DCM. The product was obtained as microcrystalline material in 85% (47.6 mg) yield.

### Large scale:

IPr•HCl (2.70 g, 6.55 mmol), [Pd(allyl)(µ-Cl)]₂ (1 g, 2.73 mmol) and a magnetic stir bar were charged into a scintillation vial or round bottom flask. Acetone (28 mL) was then added followed by K₂CO₃(755 mg, 5.47 mmol) and the reaction mixture was refluxed for 10 h. The same general work up as above afforded the product in 92% (2.87 g) yield.

**¹H NMR (400 MHz, CDCl₃):** δ (ppm) = δ 7.42 (t, *J* = 7.32 Hz, 2H), 7.28 (m, 4H), 7.15 (s, 2H), 4.86-4.76 (m, 1H), 3.91 (dd, *J*=5.66 Hz, 1H), 3.16-3.03 (m, 2H), 3.04 (d, *J*=6.31 Hz, 1H), 2.89-2.82 (m, 2H), 2.77 (d, *J*=13.64 Hz, 1H), 1.59 (d, *J*=12.09 Hz, 1H), 1.39 (d, *J*=7.12 Hz, 6H), 1.34 (d, *J*=6.8 Hz, 6H), 1.18 (d, *J*=7.05, 6H), 1.09 (d, *J*=7.12 Hz, 6H).
**¹³C {¹H} NMR (100 MHz, CDCl₃):** δ (ppm) = δ 186.1 (C, carbene), 146.0 (C), 145.8 (C), 135.6 (C), 129.7 (CH), 123.9 (CH), 123.7 (CH), 123.6 (CH), 114.0 (CH), 72.3 (CH₂), 49.3 (CH₂), 28.4 (CH₂), 28.3 (CH₂) 26.4 (CH₃), 25.6 (CH₃), 22.7 (CH₃), 22.6 (CH₃).
**Elemental Analysis:** Expected C = 62.93, H = 7.39, N = 4.89, Found C = 63.06, H = 7.55, N = 5.02.

**Table S-2: Optimisation of the synthesis of [Pd(IPr)(allyl)CI]**

| | | | | | |
|---|---|---|---|---|---|
| 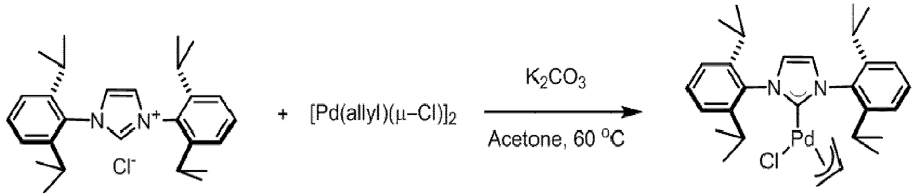 | | | | | |

| Entry | IPr•HCl (equiv.) | [Pd(allyl)Cl]₂ (equiv.) | K₂CO₃ (equiv.) | t (h) | Yield (%) |
|---|---|---|---|---|---|
| 1 | 1 | 0.5 | 2 | 5 | 85* |
| 2 | 1.1 | 0.5 | 2 | 5 | 75* |
| 3 | 1 | 0.55 | 1.1 | 5 | 60* |
| 4 | 1 | 0.6 | 1.1 | 5 | 57* |
| **5** | **1.2** | **0.5** | **1** | **5** | **85** |

| | | | | | |
|---|---|---|---|---|---|
| * ¹H NMR shows impurities in the spectra. ^{a}Isolated yield after filtration through silica using DCM. All reactions were carried out in air using technical grade acetone (0.235 M). | | | | | |

### 3. Synthesis and optimisation of [Pd(IPr*)(cin)Cl]

### Small scale:

IPr*•HCl (110 mg, 0.116 mmol), [Pd(cin)(µ-Cl)]₂ (30.0 mg, 0.058 mmol), a magnetic stir bar and acetone (0.5 mL) were charged into a vial or round bottom flask , the reaction was stirred at 60 °C for 1 h. Then K₂CO₃ (32.0 mg, 0.232 mmol) was added and the mixture was stirred at 60 °C for 24 h. After the reaction was complete, the solvent was removed under vacuum. The residue was re-dissolved in dichloromethane (1-2 mL) and filtered through a pad of silica. The silica was washed with DCM (20 mL). The resulting solution was concentrated and dried in vacuum, until a powder was obtained. In some cases washing with pentane (5 mL) was necessary in order to remove the residual DCM. The product was obtained as microcrystalline material in a 94% (127 mg) yield.

### Large scale:

IPr*•HCl (3.66 g, 3.86 mmol), [Pd(cin)(µ-Cl])₂ (1 g, 1.93 mmol) and a magnetic stir bar were charged into a scintillation vial or round bottom flask. Acetone (13 mL) was then added and the reaction was refluxed for 3 h (65 °C). Then, K₂CO₃ (1.07 g, 7.72 mmol) was added and the reaction mixture refluxed for 30 h. The same general work up as above afforded the product in 98% (4.23 g) yield.

**¹H NMR (400 MHz, CDCl₃):** δ (ppm) = δ 7.50 (d, *J* = 7.10 Hz, 2H), 7.41 (t, *J* = 7.42, 3H), 7.37 (m, 16H), 7.08 (m, 14H), 6.82 (m, 14H), 6.09 (s, 2H), 5.70 (s, 2H), 5.31 (s, 2H), 5.01-4.96 (m, 1H), 4.64 (d, *J* = 12.8 Hz, 1H), 2.59 (d, *J* = 5.8 Hz, 1H), 2.23 (s, 6H).

**¹³C {¹H} NMR (100 MHz, CDCl₃):** δ (ppm) = δ 182.3 (C, carbene), 144.3 (C), 143.5(C), 143.4 (C) 141.1 (C), 140.3 (C), 138.1 (C), 137.5 (C), 135.6 (C), 130.3 (CH), 130.0 (CH), 129.0 (CH), 128.9 (CH), 128.3 (CH), 128.1 (CH), 127.9 (CH), 127.4 (CH), 126.9 (CH), 126.1 (CH), 126.1 (CH),123.2 (CH) 108.7 (C), 91.0 (C), 53.3 (CH), 47.1 (C), 21.7 (CH₃).

**Elemental Analysis:** Expected: C 79.85, H 5.67, N 2.39. Found: C 79.64, H 5.81, N 2.36.

**Table S-3: Optimisation of the synthesis of [Pd(IPr*)(cin)Cl]**

| | | | | | |
|---|---|---|---|---|---|
| 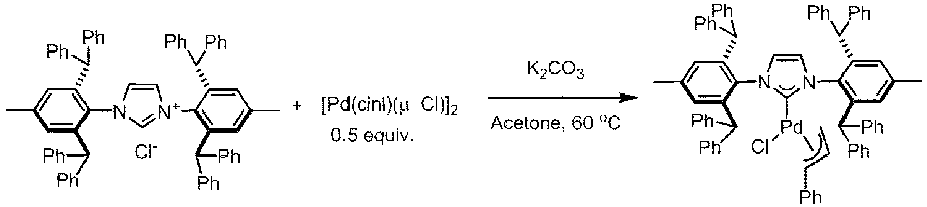 | | | | | |

| Entry | IPr*•HCl (equiv.) | K₂CO₃ (equiv.) | t (h) | Yield^{a} (%) | Acetone (M) |
|---|---|---|---|---|---|
| 1 | 1 | 2 | 5 | 80*^{b} | 0.1158 |
| 2 | 1 | 2 | 20 | 81* | 0.1158 |
| 3 | 1 | 2 | 5 | 70* | 0.1158 |
| 4 | 1.2 | 1 | 5 | 84* | 0.105 |
| 5 | 1 | 2 | 5 | 74*^{c} | 0.105 |
| 6 | 1 | 1 | 5 | 59* | 0.105 |
| 7 | 1 | 2 | 5 | 73*^{c} | 0.105 |
| 8 | 1 | 1 | 5 | 60* | 0.105 |
| 9 | 1 | 2 | 5 | 78*^{d} | 0.105 |
| 10 | 1 | 2 | 20 | 99^{d} | 0.105 |
| **11** | **1** | **2** | **24** | **94^{d}** | **0.2316** |
| 12 | 1 | 1.5 | 20 | 73* | 0.2316 |
| 13 | 1 | 2 | 24 | 93 | 0.105 |
| 14 | 1 | 2 | 24 | 98* | 0.0579 |

| | | | | | |
|---|---|---|---|---|---|
| * ¹H NMR shows impurities in the spectra. ^{a}Isolated yield after filtration through silica using DCM. All reactions were carried out in air using technical grade acetone. ^{b}Clean NMR spectrum obtained but difficulties in reproducing it. ^{c}IPr*•HCl and [Pd(cin)Cl]₂ in acetone were stirred at 60 °C for 7 min, then K₂CO₃ was added and left to stir and heat for 5 h. ^{d}IPr*•HCl and [Pd(cin)Cl]₂ in acetone were stirred at 60 °C for 1 h, then K₂CO₃ was added and the mixture was stirred at 60 °C for the indicated time. ^{e}IPr*·HCl and [Pd(cin)Cl]₂ in acetone were stirred at 60 °C for 3 h, then K₂CO₃ was added and the mixture was stirred at 60 °C for 24 h. | | | | | |

### 4. Synthesis of [Pd(SIPr)(cin)Cl]

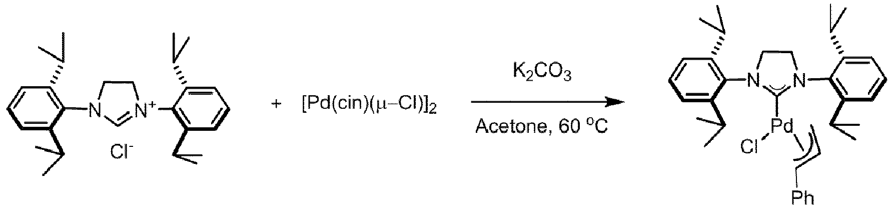

SIPr•HCl (110 mg, 0.234 mmol), [Pd(cin)(µ-Cl)]₂ (49.7 mg, 0.096 mmol) and a magnetic stir bar were charged into a vial or round bottom flask. Acetone (1 mL) was then added, followed by K₂CO₃(26.9 mg, 0.192 mmol) and the mixture was left to stir for 5 h at 60 °C. The same general work up as above afforded the desired complex as microcrystalline material in 78% (122 mg) yield.

**¹H NMR (400 MHz, CDCl₃):** δ (ppm) =δ 7.38-7.35 (m, 2H), 7.26 (d, *J* = 7.52 Hz, 3H), 7.14-7.13 (m, 4H), 5.09-5.01 (m, 1H), 4.33 (d, *J* = 13.3 Hz, 1H), 4.02 (s, 4H), 3.44 (br. s, 1H), 1.43 (m, 12H), 1.27 (d, *J* = 6.31 Hz, 12H).

**¹³C {¹H} NMR (100 MHz, CDCl₃):** δ (ppm) = δ 212.1 (C), 147.2 (C), 137.7 (C), 136.4 (C), 129.1 (C), 128.3 (CH), 127.4 (CH), 126.8 (CH), 124.3 (CH), 109.2 (CH), 91.7 (CH), 54.1 (CH), 46.0 (CH₂), 28.6 (CH₃), 26.7 (CH₃).

**Elemental analysis:** Expected: C 66.76, H 7.72, N 4.21. Found: C 66.63, H 7.64, N 4.27.

### 5. Synthesis of [Pd(SIMes)(cin)Cl]

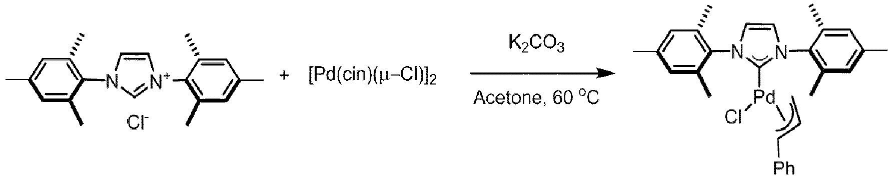

SIMes•HCl (100 mg, 0.292 mmol), [Pd(cin)(µ-Cl)]₂ (62.9 mg, 0.122 mmol), a magnetic stir bar and acetone (1.2 mL) were charged into a vial or round bottom flask , followed by K₂CO₃(33.5 mg, 0.243 mmol). The mixture was stirred at 60 °C for 5 h. The general work up procedure was then followed, affording the product as microcrystalline material in 80% (135 mg) yield.

**¹H NMR (400 MHz, CDCl₃):** δ (ppm) =δ7.12 (m, 3H), 7.06 (m, 2H), 6.96 (d, *J* = 11.19 Hz, 4H), 5.30 (s, 1H), 5.12-5.04 (m, 1H), 4.27 (d, *J* = 12.96 Hz, 1H), 3.99 (m, 4H), 3.27 (d, *J* = 6.86 Hz, 1H), 2.44 (d, *J* = 15.24 Hz, 10H), 2.31 (s, 6H), 1.93 (m, 1H).

**¹³C {¹H} NMR (100 MHz, CDCl₃):** δ (ppm) = δ 210.9 (C, carbene), 138.0 (C), 137.8 (C), 136.3 (C), 135.7 (C), 129.1 (CH), 128.0 (CH), 127.5 (CH), 127.1 (CH), 126.4 (CH), 109.4 (CH), 92.1 (CH), 51.0 (CH₂), 46.5 (CH₂), 20.9 (CH₃).

**Elemental analysis:** Expected: C 66.76, H 7.72, N 4.21. Found: C 66.63, H 7.64, N 4.27.

### 6. Synthesis of [Pd(IPr*^{2-Np})(cin)Cl]

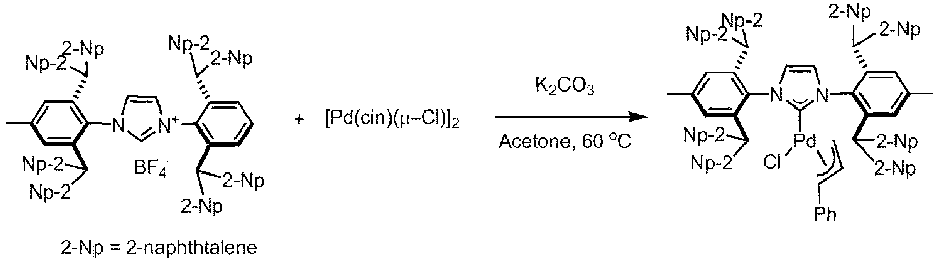

IPr*^{2-Np}•BF₄ (171.2 mg, 0.115 mmol), [Pd(cin)(µ-Cl)]₂ (30.0 mg, 0.058 mmol), a magnetic stir bar and acetone (1.1 mL) were charged into a vial or round bottom flask. The reaction was stirred at 60 °C for 1 h. Then K₂CO₃ (32.0 mg, 0.232 mmol) was added and the mixture was stirred at 60 °C for 24 h. The general work up procedure was followed; affording the product as microcrystalline material in 94% (170 mg) yield.

**¹H NMR (400 MHz, CDCl₃):** δ (ppm) =δ 7.86-7.84 (m, 12H), 7.71 (d, *J* = 6.95 Hz, 2H), 7.62 (d, *J* = 7.79 Hz, 4H), 7.67-7.51 (m, 7H), 7.47-7.41 (m, 10H), 7.39-7.29 (m, 9H), 7.26-7.16 (m, 14H), 7.16 (d, *J* = 15.6 Hz, 4H), 7.12 (s, 4H), 6.94 (d, *J* = 8 Hz, 2H), 6.60 (d, *J* = 9.68 Hz, 2H), 5.37 (s, 2H), 5.05 (d, *J* = 12.94 Hz, 1H), 3.15 (d, *J* = 7.1 Hz, 1H), 2.24 (s, 6H), 1.94 (d, *J* = 11.3 Hz, 1H).

**¹³C {¹H} NMR (100 MHz, CDCl₃):** δ (ppm) = 5182.0 (C, carbene), 141.2 (C), 138.5 (C), 135.9 (C), 133.0 (C), 132.9(C), 132.0 (CH), 131.8 (CH), 130.7 (CH), 129.2 (CH), 128.9 (CH), 128.6 (CH₂), 127.9 (CH₂), 127.8 (CH₂), 127.7 (CH₂), 127.4 (CH₂), 127.3 (CH₂), 127.0 (CH₂), 125.7 (CH₂), 125.6(CH₂), 125.5 (CH₂), 109.6 (CH₂), 92.1 (CH₂), 51.5 (CH₂), 47.1 (CH₂), 21.7 (CH₂).

**Elemental analysis:** Expected: C 84.01, H 5.19, N 1.78. Found: C 83.87, H 5.23, N 1.91.

### 7. Synthesis of [Pd(IPent)(cin)Cl]

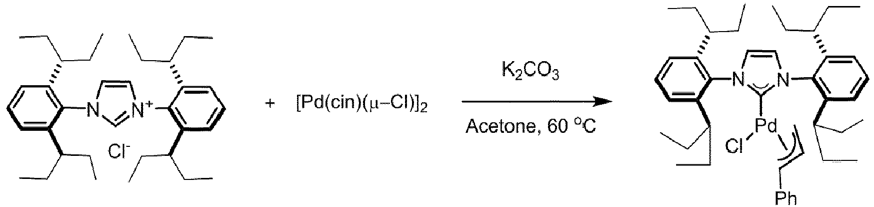

IPent.HCl (100 mg, 0.186 mmol), [Pd(cin)(µ-Cl)]₂ (48.2 mg, 0.093 mmol), a magnetic stir bar and acetone (0.8 mL) were charged into a vial or round bottom flask, the reaction was stirred at 60 °C for 1 h. Then, K₂CO₃ (51.4 mg, 0.372 mmol) was added and the mixture was stirred at 60 °C for 24 h. The general work up procedure was followed, affording the product as microcrystalline material in 85% (123 mg) yield.

**¹H NMR (400 MHz, CDCl₃):** δ (ppm) =δ 7.41-7.37 (m, 2H), 7.18-7.09 (m, 11 H), 5.21-5.13 (m, 1H), 4.41 (d, *J* = 13.4 Hz, 1H), 2.53 (br. m, 4H), 2.11-1.97 (m, 4H), 1.76-1.72 (m, 4H), 1.63 (m, 4H), 1.52-1.43 (m, 4H), 1.01 (m, 12H), 0.77 (m, 12H).

**¹³C {¹H} NMR (100 MHz, CDCl₃):** δ (ppm) = δ 181.5 (C, carbene), 143.6 (C), 137.5 (C) 137.5 (C), 128.8 (CH), 128.2 (CH), 127.2 (CH), 126.6 (CH), 124.8 (CH), 124.2 (CH), 108.2 (C), 91.4 (CH), 41.5(CH), 27.9 (CH₂), 27.2 (CH₂), 12.8 (CH₃), 11.2 (CH₃).

**Elemental analysis:** Expected: C 69.55 H 8.09, N 3.69. Found: C 69.49, H 8.19, N 3.80.

### 8. Synthesis of [Pd(IHept)(cin)Cl]

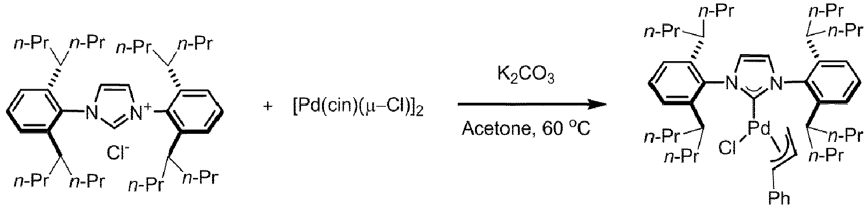

IHept•HCl (100 mg, 0.154 mmol), [Pd(cin)(µ-Cl)]₂ (39.8 mg, 0.076 mmol), a magnetic stir bar and acetone (0.7 mL) were charged into a vial or round bottom flask, the reaction was stirred for at 60 °C for 1 h. Then, K₂CO₃ (42.5 mg, 0.308 mmol) was added and the mixture was stirred at 60 °C for 24 h. The general work up procedure was followed, affording the product as microcrystalline material in 81% (109 mg) yield.

**¹H NMR (400 MHz, CDCl₃):** δ (ppm) = δ 7.40-7.36 (m, 2H), 7.19-7.13 (m, 9H), 7.06 (s, 2H), 5.18-5.10 (m, 1H), 4.44 (d, *J* = 13.8 Hz, 1H), 2.61 (br. s, 4H), 1.98-1.91 (m, 4H), 1.56-1.26 (m, 20H), 1.15-1.11 (m, 8H), 0.90 (t, *J* = 7.12 Hz, 7.28 Hz, 24H).

**¹³C {¹H} NMR (100 MHz, CDCl₃):** δ (ppm) = δ 181.4 (C, carbene), 144.2 (C), 137.5 (C), 137.2 (CH₂), 128.9 (CH), 128.1 (CH), 127.3 (CH), 126.5 (CH), 124.7 (CH), 124.2 (CH), 108.1 (C), 91.5 (CH), 39.1 (CH₃), 39.0 (CH), 37.8 (CH₂), 21.4 (CH₂), 20.3 (CH₂), 14.5 (CH₃).

**Elemental analysis:** Expected: C 71.62 H 8.90, N 3.21. Found: C 71.5, H 8.75, N 3.30.

### 9. Synthesis of [Pd(IPr*^{OMe})(cin)Cl]

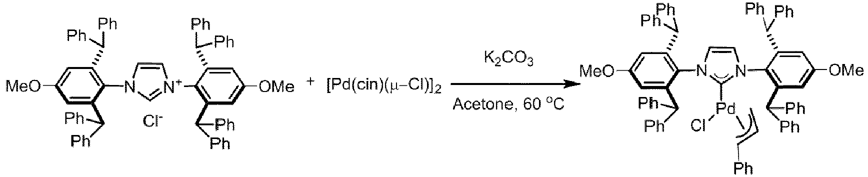

IPr*^{OMe}•HCl (100 mg, 0.103 mmol), [Pd(cin)(µ-Cl)]₂ (26.7 mg, 0.051 mmol), a magnetic stir bar and acetone (0.5 mL) were charged into a vial or round bottom flask and the reaction was stirred at 60 °C for 1 h. Then, K₂CO₃ (28.5 mg, 0.206 mmol) was added and heated at 60 °C for 24 h. The general work up procedure was followed, affording the product as microcrystalline material in 85% (107 mg) yield.

**¹H NMR (400 MHz, CDCl₃):** δ (ppm) =δ 7.49 (d, *J* = 7.37 Hz, 2H), 7.40 (t, *J* = 7.09 Hz, 2H), 7.30-7.19 (m, 22H), 7.10-7.09 (m, 11H), 6.85 (d, *J* = 7.24 Hz, 4H), 6.80 (d, *J* = 6.57 Hz, 4H), 6.55 (s, 4H), 6.07 (s, 2H), 5.73 (s, 2H), 5.23 (s, 2H), 5.13-5.05 (m, 1H), 4.69-4.66 (m, 1H), 3.57 (s, 6H), 2.67-2.66 (m, 1H).

**¹³C {¹H} NMR (100 MHz, CDCl₃):** δ (ppm) = 5182.9 (C, carbene), 158.6 (C), 144.0 C), 130.2 (C), 129.0 (C), 128.9 (C), 128.4 (C), 128.1 (C), 128.0 (CH), 127.4 (CH), 127.0 (CH), 126.3 (CH), 126.1 (CH), 123.3 (CH), 114.8 (CH), 114.7 (CH), 108.7 (C), 91.7 (CH), 54.8 (CH₂), 51.4 (CH₃), 47.0 (CH₃).

**Elemental analysis:** Expected: C 77.8, H 5.44 N 2.33 Found: C 77.59 H 5.35 N 2.36.

### 10. Synthesis and analysis of the palladate intermediates

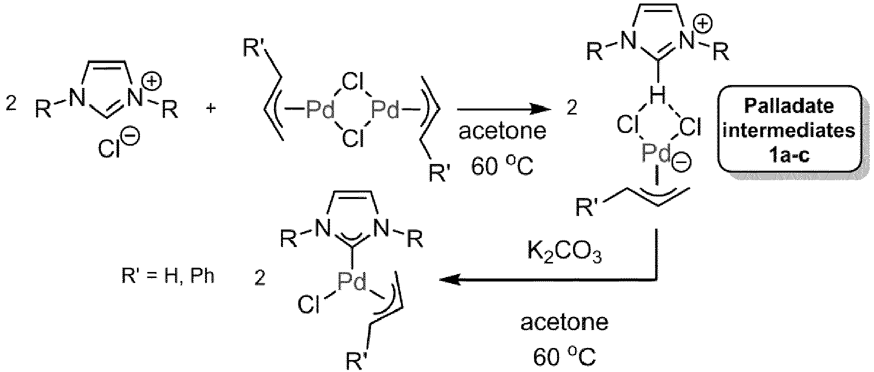

### 10.1. Synthesis of [IPrH][Pd(cin)Cl₂] (1a)

IPr•HCl (82.04 mg, 0.193 mmol), [Pd(cin)(µ-Cl)]₂ (50.0 mg, 0.096 mmol), a magnetic stir bar and acetone (0.8 mL) were charged into a vial. The mixture was stirred at 60 °C for 1 h. The solvent was removed and the product was dried under vacuum. The product was obtained as a dark orange powder in a 99% (132 mg) yield. Single crystals were grown by vapour diffusion of hexane into a solution of the complex in DCM.
**¹H NMR (400 MHz, CDCl₃):** δ (ppm) = 9.19 (s, 1H), 8.32 (d, *J* = 1.60 Hz, 2H), 7.56-7.52 (m, 2H), 7.46 (d, *J* = 7.44 Hz, 2H), 7.33 (d, *J* = 7.75 Hz, 4H), 7.21 (m, 3H), 5.66 (s, 1H), 4.46 (s, 1H), 3.83 (s, 1H), 2.90 (s, 1H), 2.48-2.41 (m, 4H), 1.27 (d, *J* = 6.81 Hz, 12H), 1.19 (d, *J* = 6.76 Hz, 12H).
**¹³C {¹H} NMR (100 MHz, CDCl₃):** δ (ppm) = δ 144.9 (C), 136.7 (CH), 131.8 (C), 129.7 (C), 128.4 (CH), 127.7 (CH), 127.5 (CH), 124.5 (CH), 105.0 (C), 28.8 (CH₃), 24.4 (CH₃), 23.7 (CH₃).
**Elemental analysis:** Expected: C 63.02, H 7.05 N 4.08 Found: C 62.92 H 7.14 N 4.15

### 10.2. Synthesis of [IPrH][Pd(allyl)Cl₂] (1b)

IPr•HCl (82.04 mg, 0.193 mmol), [Pd(allyl)(µ-Cl)]₂ (35.3 mg, 0.0965 mmol), a magnetic stir bar and acetone (0.8 mL) were charged to a vial. The mixture was stirred at 60 °C for 1 h. Then the solvent was removed and dried under vacuum. The product was obtained as a yellow powder in a 99% (117 mg).
**¹H NMR (400 MHz, CDCl₃):** δ (ppm) = 9.16 (s, 1H), 8.28 (d, *J* = 1.62 Hz, 2H), 7.54-7.50 (m, 2H), 7.32 (d, *J* = 7.17 Hz, 4H), 5.16-5.10 (m, 1H), 3.76 (s, 2H), 2.67 (d, *J* = 11.57 Hz, 2H), 2.48-2.44 (m, 4H), 1.27 (d, *J* = 6.79 Hz, 12H), 1.20 (d, *J* = 7.20 Hz, 12H).
**¹³C {¹H} NMR (100 MHz, CDCl₃):** δ (ppm) = 5144.9 (C), 136.8 (CH), 131.8 (C), 129.7 (C), 127.3 (CH), 124.4 (CH), 108.9 (C), 60.3 (CH), 28.8 (CH₃), 24.4 (CH₃), 23.8 (CH₃).

**Elemental analysis:** Expected: C 59.07, H 7.27 N 4.59, Found: C 58.90 H 7.17 N 4.57.

### 10.3. Synthesis of [IPr*H][Pd(cin)Cl₂] (1c)

IPr*•HCl (109.9 mg, 0.115 mmol), [Pd(cin)(µ-Cl)]₂ (30.0 mg, 0.058 mmol), a magnetic stir bar and acetone (1.1 mL) were charged to a vial. The mixture was stirred at 60 °C for 5 h. Then, the solvent was removed and dried under vacuum. The product was obtained as a yellow powder in a 99% (139 mg). Single crystals were grown by vapour diffusion of hexane into a solution of the complex in DCM.

**¹H NMR (400 MHz, CDCl₃):** δ (ppm) = δ 12.52 (s, 1H), 7.31-7.23 (m, 17H), 7.19-7.06 (m, 17H), 6.77-6.75 (m, 10H), 5.87-5.75 (br. m, 1H), 5.41 (s, 4H), 5.33 (s, 2H), 4.68-3.68 (m, 2H), 3.15-2.45 (m, 1H), 2.18 (s, 6H).
**¹³C {¹H} NMR (100 MHz, CDCl₃):** δ (ppm) 142.6 (C), 142.5 (C), 142.1 (C), 140.7 (C), 140.6 (CH), 130.7 (C), 130.2 (CH), 129.1 (C), 128.3 (C), 127.9 (CH), 126.6 (CH), 126.5 (CH), 122.8 (CH), 105.5 (CH), 51.0 (CH₃), 21.7(CH₃).
**Elemental analysis:** Expected: C 77.38 H 5.66 N 2.31 Found: C 77.25 H 5.47 N 2.36.

### 11. The Suzuki-Miyaura coupling

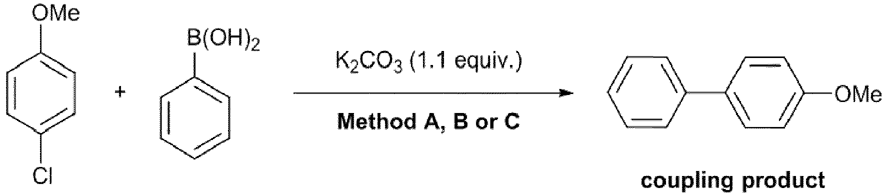

### 11.1. Method A:¹

The vial containing the precatalyst was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was then sealed with a screw cap fitted with a septum. The reaction mixture was taken outside the glovebox. 1 mL of an ethanol/water (1:1) mixture (degassed) was added and the reaction was left to stir at 80 °C for 4 h.

### 11.2. Method B:

The vial containing the precatalyst was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was sealed with a screw cap fitted with a septum. The reaction mixture was taken outside the glovebox. 1 mL of ethanol (degassed) was added and the reaction was left to stir at RT for 20 h.

### 11.3. Methods C1, C3:

The vial was charged with a stirring bar, **1a-c** (0.3 mol%) and K₂CO₃ (1.1 equiv.) under argon. the mixture was stirred for; 1 h at 60 °C **(C1)** or 30 min at 60 °C **(C3),** then 4-chloroansiole (0.5 mmol) and phenylboronic acid (1 equiv.) were added and the reaction was left stirring at RT for 20 h.

For entries 7-9: Pd dimer (0.15 mol%) and NHC·HCl (0.3 mol%) were used instead of **1a-c.**

### 11.4. Methods C2:

The vial containing the **1a-c** (0.3 mol%) was transferred into the glovebox. Inside the glovebox, the vial was charged with a stirring bar, 4-chloroansiole (0.5 mmol), phenylboronic acid (1 equiv.) and K₂CO₃ (1.1 equiv.). The vial was sealed with a screw cap fitted with a septum. The reaction mixture was taken outside the glovebox. 1 mL of ethanol (degassed) was added and the reaction was stirred for 1 h at 60 °C, then 20 h at RT.

**Coupling product:** 4-methoxy-1,1'-biphenyl

**¹H NMR (400 MHz, CDCl₃):** δ (ppm) = 7.59-7.50 (m, 4H), 7.45-7.39 (m, 2H), 7.33-7.28 (m, 1H), 7.02-6.95 (m, 2H), 3.86 (s, 3H).

Analytical data obtained was in accordance with the reported values.²

## Claims

1. A compound of formula 1 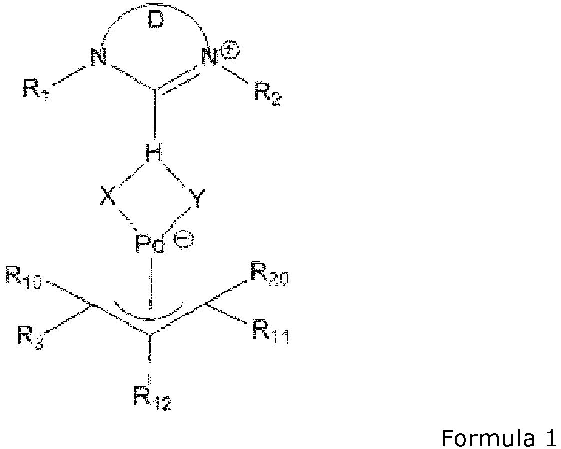 wherein
R1 and R2 are identical or different and are selected from the group consisting of hydrogen, substituted or unsubstituted alkyl, substituted or unsubstituted heterocycloalkyl, substituted or unsubstituted aryl and substituted or unsubstituted heteroaryl;
D can be part of a C2 to C4 bridge that can be saturated or unsaturated, substituted or unsubstituted, with bridge carbon atoms being able to be replaced by heteroatoms;
R3, R11 and R12 may be the same or different and can be hydrogen, substituted or unsubstituted aryl, heteroaryl, alkyl, alkenyl, alkynyl or combinations thereof.
R10 and R20 can be hydrogen or form a substituted or unsubstituted, unsaturated ring, which may be fused with further rings; or to each other to form a ring
X and Y may be the same or different and are anionic ligands.

2. A compound of formula 1a according to claim 1, 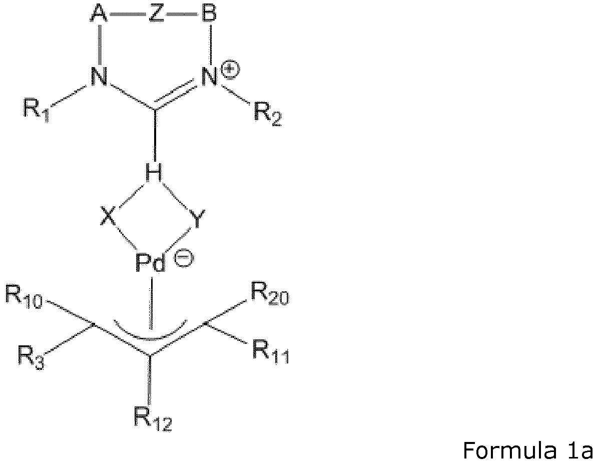 wherein
A and B are carbon atoms;
Z is a single bond or a double bond;
R1 and R2 may be the same or different and are selected from the group consisting of hydrogen, substituted or unsubstituted (C1-C18)-alkyl, substituted or unsubstituted (C2-C7)-heterocycloalkyl, substituted or unsubstituted (C6-C14)-aryl, substituted or unsubstituted (C3-C14)-heteroaryl;
R3, R11 and R12 may be the same or different and can be hydrogen, substituted or unsubstituted aryl, heteroaryl, alkyl, alkenyl, alkynyl or combinations thereof.
R10 and R20 can be hydrogen or form a substituted or unsubstituted, unsaturated ring, which may be fused with further rings;
X and Y may be the same or different and are anionic ligands.

3. A compound of formula 1 as in claim 1 or 2 with the formula 2 or 3 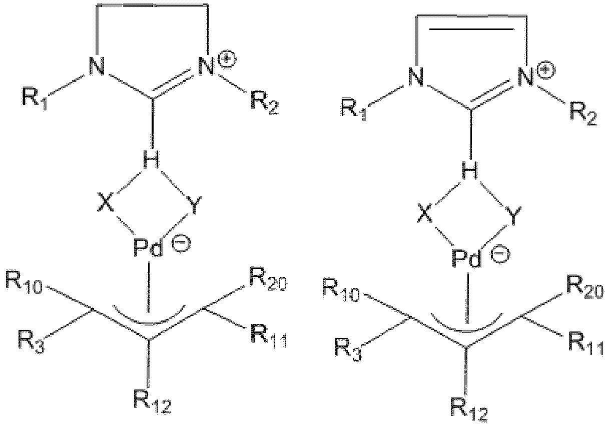 wherein R1, R2, R3, R11, R12, R10, R20, X and Y are as defined in claim 1.

4. A compound according to claim 1, 2 or 3, wherein X and Y are the same and are halogen, acetate, fluoroacetate, tetrafluoroborate, in particular chlorine or bromine.

5. A compound according to any of claims 1 to 4, wherein R1 and R2 are each independently selected from the group consisting of formula 4 to formula 8 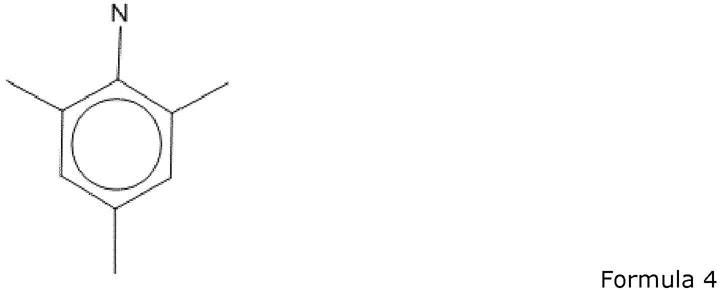 2,4,6-trimethylphenyl 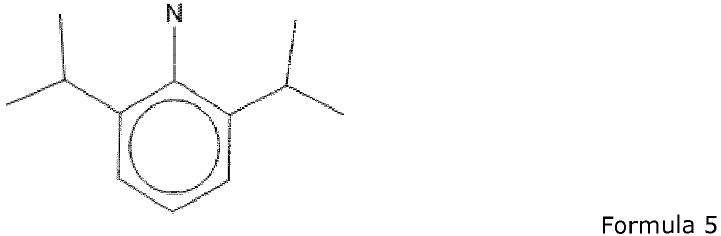 2,6-d iisopropyl phenyl 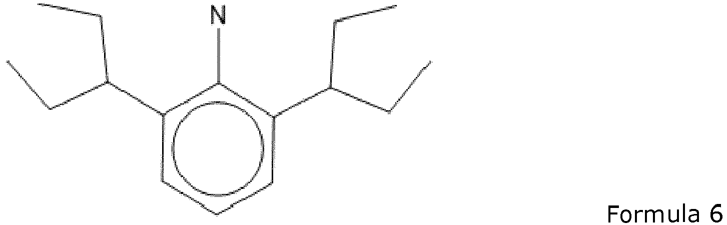 2,6-bis(diethylmethyl)-phenyl 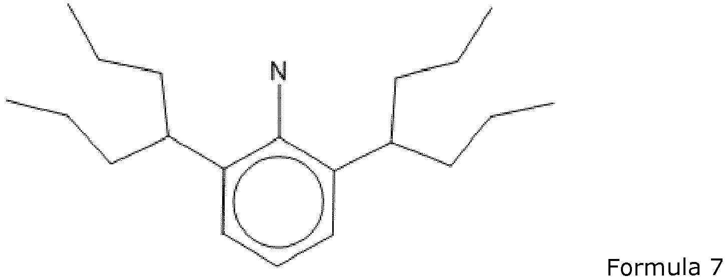 2,6-bis(dipropylmethyl)-phenyl 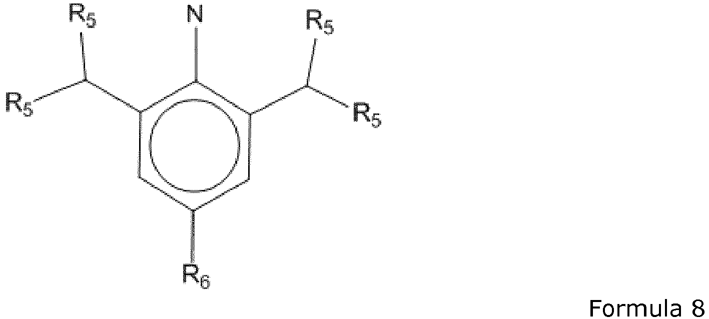 2,6-bis(diphenylmethyl)-4-methylphenyl, 2,6-bis(diphenylmethyl)-4-methoxyphenyl, 2,6-bis(dinaphthylmethyl)-4-methylphenyl
wherein R5 is phenyl, naphthyl, R6 is hydrogen, methyl or methoxy and N indicates the nitrogen atom of the heterocyclic ring in formulae 1 to 3 to which the substituted aryl ring is linked.

6. A compound according to any of claims 1 to 5, R1 and R2 being the same.

7. A compound according to any of claims 1 to 6, R3, R11 and R12 being selected from the group consisting of hydrogen, methyl, ethyl, propyl, isopropyl, butyl, tert.-butyl, sec.-butyl, phenyl, naphthyl or combinations thereof.

8. A compound according to any of claims 1 to 7, R12 being hydrogen.

9. A compound according to any of claims 1 to 8, R11 being hydrogen.

10. A compound according to any of claims 1 to 9, R10 and R20 are forming a five or six-membered unsaturated ring suitable for η³-coordination of the palladium.

11. A compound of claim 10, the five or six-membered unsaturated ring being fused with at least one benzene ring.

12. A compound according to any of claims 1 to 11, R3 being selected from the group consisting of hydrogen, methyl, ethyl, propyl, isopropyl, butyl, tert.-butyl, sec.-butyl, phenyl, naphthyl or combinations thereof, R11 and R12 being hydrogen and R10 and R20 together form a five membered unsaturated ring fused with a benzene ring so as to form an indene ring system.

13. A method for making compounds of any of claims 1 to 12, wherein an imidazolium salt is reacted with the palladium dimer [Pd(R3R10-(allyl-R12)-R11R20)(µ-X)]₂ in a solvent, wherein R3 and X are as defined above.

14. The method of claim 13, the solvent being a hydrocarbon, halogenated hydrocarbon or polar solvent, specifically straight-chained or cyclic haloalkyl, ether, ketone or combinations thereof.

15. The method of claim 13 or 14, wherein the reaction temperature is from 20°C to 111°C, in particular from 40°C to 90°C.

16. The method of any of claims 13 to 15, wherein the reaction time is from 30 minutes to 24 hours, in particular from 1 hour to 5 hours.

17. The method of any of claims 13 to 16, the compound R3R10-(allyl-R12)-R11R20 being a compound of formula 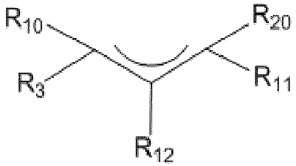 with R3, R10, R11, R12 and R20 as defined above.

18. A method of making a complex of the type [Pd(NHC)(R3R10-(allyl-R12)-R11R20)X] comprising the steps of
- providing a compound according to any of claims 1 to 5;
- reacting said compound with a base in the presence of a solvent;
- optionally isolating the resulting [Pd(NHC)(R3R10-(allyl-R12)-R11R20)X],
wherein NHC is the corresponding NHC ligand of the compound according to any of claims 1 to 5 and X and R3 are defined as above.

19. The method of claim 18, wherein the solvent is a polar-aprotic solvent or a polar-protic solvent, in particular a haloalkane, an aromatic solvent such as benzene, toluene or xylene, ethers such as diethyl ether, tetrahydrofurane or MTBE, ketones such as acetone or C2 to C6 alcohols such as ethanol, isopropanol or n-butanol.

20. The method of claim 18 or 19, the base being a basic metal compound or an organic base, in particular an alkaline or earth-alkaline compound.

21. The method of any of claims 18 to 20, the base being an alkaline or earth-alkaline oxide, hydroxide or carbonate or an amine, in particular potassium carbonate, sodium carbonate, potassium hydroxide, sodium hydroxide, pyridine or triethylamine.

22. A method of catalyzing a chemical reaction comprising the steps of
- Providing a a complex of the type [Pd(NHC)(R3R10-(allyl-R12)-R11R20)X] with a method of any of claims 13 to 21, and
- Employing the complex of the type [Pd(NHC)(R3R10-(allyl-R12)-R11R20)X] as catalyst in a chemical reaction, wherein NHC is the corresponding NHC ligand of the compound according to any of claims 1 to 12 and R3 is defined as above.

23. The method of claim 12, the chemical reaction being a carbon-carbon or carbon-nitrogen coupling reaction in organic chemistry.

24. The method of claim 12, the chemical reaction being a Buchwald-Hartwig coupling.

25. The method of claim 12 or 13, the chemical reaction being a Heck reaction, Stille reaction, a Suzuki-Miyaura coupling, Sonogashira, coupling, a Negishi coupling or a Hiyama coupling.
